# EUROPEAN PATENT SPECIFICATION

(11) **EP 4 403 978 B1**
(45) Date of publication and mention of the grant of the patent: **15.10.2025**
(21) Application number: 23210684.9
(22) Date of filing: 17.11.2023
(51) Int. Cl.: G02B 27/00, G06F 3/01

(54) **WAVELENGTH-TUNABLE OPTICAL PATTERN PROJECTOR**
WELLENLÄNGENABSTIMMBARER OPTISCHER MUSTERPROJEKTOR
PROJECTEUR OPTIQUE ACCORDABLE EN LONGUEUR D'ONDE

(30) Priority: 17.01.2023 US 202318097954
(43) Date of publication of application: 24.07.2024
(73) Proprietor: Meta Platforms Technologies, LLC, Menlo Park, CA 94025 (US)
(72) Inventor: An, Yatong, Menlo Park (US); Wang, Youmin, Menlo Park (US)
(74) Representative: Murgitroyd & Company

(56) References cited:
- CN-A- 114 112 959
- US-A1- 2013 176 568
- US-A1- 2017 131 475
- US-A1- 2020 192 097

## Description

### TECHNICAL FIELD

The present disclosure relates to optical components, and in particular to light sources for visual display devices and 3D imaging.

### BACKGROUND

Visual displays provide information to viewer(s) including still images, video, data, etc. Visual displays have applications in diverse fields including entertainment, education, engineering, science, professional training, advertising, to name just a few examples. Some visual displays such as TV sets display images to several users, and some visual display systems such as head-mounted display (HMDs) and near-eye displays (NEDs) are intended for individual users.

An artificial reality system generally includes an HMD, a NED, or the like (e.g., a headset or a pair of glasses) configured to present content to a user. A NED or an HMD may display virtual objects or combine images of real objects with virtual objects, as in virtual reality (VR), augmented reality (AR), or mixed reality (MR) applications. The displayed VR / AR / MR content can be three-dimensional (3D) to enhance the experience and, possibly, to match virtual objects to real objects when observable by the user. An HMD or NED for VR applications may include ranging means to orient the user in a surrounding environment, as the surrounding scenery may not be directly visible to the user.

Because HMDs and NEDs are usually worn on the head of a user, they can benefit from a compact and efficient configuration, including efficient light sources and illuminators for eye tracking and ranging.

US 2017/131475 A1 describes a scene projector including an array of light emitting pixels, a tunable filter element, and a spatial light modulator. The tunable filter element is optically coupled to the array of light emitting pixels such that light emitted from the array of light emitting pixels is passed through the tunable filter element as filtered light. The spatial light modulator is optically coupled to the array of light emitting pixels and is configured to generate transmitted light by interacting with the filtered light to control at least one of an amplitude, a phase, and a polarization of the filtered light.

US 2013/176568 A1 describes a system and method for detecting analytes using a conformal filter. A conformal filter, which may comprise a tunable filter, is configured to filter interacted photons conforming to a spectral shape correlated with an analyte of interest. Conformal filter configurations may he selected by consulting a modified look-up table associated with an analyte. An iterative methodology may be used to calibrate a conformal design for an analyte of interest, refine a previous conformal filter design for an analyte of interest, and/or generate a new conformal filter design for an analyte of interest.

CN 114 112 959 A describes a hyperspectral depth imaging system which comprises a projection structured light morphology detection module, a front imaging unit, a tunable filtering spectrum scanning module and an information processing unit.

US 2020/192097 A1 describes an eye-tracking system including a holographic illuminator and a detector. The holographic illuminator includes a light source configured to provide light and a holographic medium optically coupled with the light source. The holographic medium is configured to receive the light provided from the light source and concurrently project a plurality of separate light patterns toward an eye. The detector is configured to detect a reflection of at least a subset of the plurality of separate light patterns, reflected off the eye, for determining a location of a pupil of the eye. Also disclosed is a method for determining a location of a pupil of an eye with the eye-tracking system that includes the holographic illuminator.

### SUMMARY

The scope of the present invention is set out in the claims appended hereto.

### BRIEF DESCRIPTION OF THE DRAWINGS

Examples will now be described in conjunction with the drawings, which are not to scale, in which like elements are indicated with like reference numerals, and in which:
FIG. 1 is a side cross-sectional view of an example tunable patterned-light illuminator;
FIG. 2 is an illustration of a cross-section of a spatially patterned beam provided by the illuminator of FIG. 1 in an example;
FIG. 3A is a diagram illustrating an example optical spectrum of a broadband light source that may be used in the illuminator of FIG. 1;
FIG. 3B is a diagram illustrating a wavelength-tunable light spectrum downstream of a liquid-crystal tunable filter (LCTF) in the illuminator of FIG. 1;
FIG. 4 is a schematic cross-sectional view of an example LCTF;
FIG. 5A is a schematic cross-sectional view of an example spatial filter including a patterned waveplate for providing a patterned light beam;
FIG. 5B is a schematic plan view of the patterned waveplate of the spatial filter of FIG. 5A showing alternating regions of different retardance;
FIG. 6A is a schematic cross-sectional view of a tunable spatial light modulator (SLM) for providing a tunable spatial illumination pattern;
FIG. 6B is a schematic plan view of a 1D array of LC pixels that may be used as a patterned waveplate to spatially modulate light polarization in an example of the SLM of FIG. 6A;
FIG. 6C is a schematic plan view of a 2D array of LC pixels that may be used as a patterned waveplate to spatially modulate light polarization in an example of the SLM of FIG. 6A;
FIGs. 7A, 7B, and 7C are schematic diagrams illustrating alternating waveplate regions of a tunable patterned waveplate the spatial filter of the illuminator of FIG. 1 for three different duty cycles of the pattern;
FIGs. 7D, 7E, and 7F are schematic diagrams illustrating alternating bright and dark regions of an illumination pattern at the output of the spatial filter for the three waveplate patterns of FIGs. 7A, 7B, and 7C, respectively;
FIG. 8 is a schematic diagram illustrating a cross-sectional side view of a multi-layer LC example of the illuminator of FIG. 1 with the LCTF of FIG. 4;
FIG. 9A is a flowchart of a method for generating a tunable illumination pattern for imaging an object;
FIG. 9B is a flowchart of a method for imaging an object using the tunable illumination pattern;
FIG. 10A schematically illustrates a set of different images of an object corresponding to tunable illumination patterns generated by the method of FIG. 9A;
FIG. 10B is schematically illustrates an enhanced image that may be generate based on the set of images shown in FIG. 10A;
FIG. 11 is a schematic diagram of an eye tracking system in a NED using the illuminator of FIG. 1;
FIG. 12 is a schematic diagram illustrating 3D object imaging using the illuminator of FIG. 1;
FIG. 13 is a view of an augmented reality (AR) display of this disclosure having a form factor of a pair of eyeglasses; and
FIG. 14 is a three-dimensional view of a head-mounted display (HMD) of this disclosure.

### DETAILED DESCRIPTION

While the present teachings are described in conjunction with various embodiments and examples, it is not intended that the present teachings be limited to such embodiments.

As used herein, the terms "first", "second", and so forth are not intended to imply sequential ordering, but rather are intended to distinguish one element from another, unless explicitly stated. Similarly, sequential ordering of method steps does not imply a sequential order of their execution, unless explicitly stated.

Embodiments described herein relate to an apparatus and related method for object imaging, including three-dimensional (3D) imaging of various objects. The imaging may include illuminating an object with structured light of different wavelengths, and detecting reflections of the structured with a camera to obtain a set of 2D images at different illumination wavelengths. The apparatus may include a structured light projector, or illuminator, that includes a liquid crystal (LC) tunable filter (LCTF) in series with a spatial filter, e.g. an LC spatial light modulator (SLM). The illuminator may be configured to project, upon the object or scene, an illumination pattern composed of alternating bright and dark regions, e.g. a sequence of spaced apart bright stripes or fringes.

The method may include tuning the SLM to provide different illumination patterns, e.g. of different periods and/or duty cycles, and capturing the reflected light for the different patterns to obtain two or more sets of the 2D images. Each of these sets may include one or more of the images captured at different illumination wavelengths. The plurality of images so obtained may then be used, e.g., to generate an enhanced image of the object that has more information about the object than any of the individually captured images. For example, compositionally different parts of the object (e.g. a human eye) may have different reflectivity at different illumination wavelengths, and those parts may be identified by comparing the images taken at different illumination wavelength.

In some embodiments, images of the object using illumination patterns with alternating bright and dark regions may be used to approximately determine a 3D shape of the object, e.g. based on apparent deformation of the bright regions of the illumination pattern after reflection from the object. The illuminator may be conveniently embodied using a compact and low-weight multi-layer LC structure, which may be useful e.g. in an HMD or a NED, e.g. for eye tracking and/or for ranging and 3D imaging of the surroundings.

An aspect of the claimed invention relates to an illuminator comprising a light source for emitting light spanning a wavelength band, a liquid crystal tunable filter (LCTF) for spectrally filtering the light and for tuning a center wavelength of the light within the wavelength band, and a spatial filter for spatially modulating the light to provide a patterned light beam comprising a pattern of alternating bright and dark regions in a cross-section of the patterned light beam.

According to the claimed invention, the illuminator further comprises a camera and a display system for projecting images to a viewer. In some of such implementations a controller operably coupled to the LCTF and the camera may be provided. In some of such implementations, the patterned light beam illuminates an eye of the viewer; and the camera is configured to receive a portion of the patterned light beam reflected from the eye. In some of such implementations the wavelength band of the light source may be in an infrared portion of spectrum. The controller may be configured to wavelength-tune the LCTF, obtain eye images captured by the camera in coordination with the wavelength tuning, and process the eye images to obtain eye tracking information, wherein different ones of the eye images correspond to different eye illuminating wavelengths. In some of the above implementations, the patterned light beam may illuminate at least a part of an environment surrounding the viewer, the camera may be configured to receive a portion of the patterned light beam reflected from one or more objects in the environment, and the controller may be configured to process the images to obtain depth information for the environment.

In any of the above implementations the spatial filter may be configured to vary the pattern of alternating bright and dark regions. The controller may be configured to obtain the eye images captured by the camera at different patterns of the alternating bright and dark regions of the patterned light beam illuminating the eye, and to process the images to obtain eye tracking information.

In any of the above implementations, the light may be is incident on the spatial filter as a polarized light beam, and the spatial filter may comprise a patterned waveplate configured to spatially modulate a polarization state of the polarized light beam, such that the polarization state at an output of the patterned waveplate alternates between first and second orthogonal polarization states in a cross-section of the polarized light beam. The spatial filter may further comprise a polarizer downstream of the patterned waveplate for blocking light in the first polarization state while propagating light in the second polarization state to provide the patterned light beam. In some of such implementations the patterned waveplate may comprise an array of alternating first and second waveplate segments having differing retardance. The first waveplate segments may have e.g. an approximately half-wave retardance, and the second waveplate segments may have e.g. an approximately zero retardance or an approximately full-wave retardance. In some implementations the spatial filter may comprise a spatial light modulator (SLM). The SLM may comprise e.g. an array of liquid crystal pixels having individually tunable retardance, and a polarizer downstream of the array of liquid crystal pixels.

In any of the above implementations the LCTF may comprise a sequence of serially coupled blocks, each block comprising a tunable waveplate upstream of a polarizer. Each tunable waveplate may comprise, e.g., an LC layer having a tunable retardance, wherein retardance values of different tunable waveplates of the LCTF are in a binary relationship with one another.

An aspect of the claimed invention provides a display system for projecting images to a viewer. The display system comprises an illuminator for illuminating an eye of the viewer with a patterned light beam comprising a pattern of alternating bright and dark regions in a cross-section of the patterned light beam, the illuminator comprising a spatial filter operable to spatially filter light incident thereon to output the patterned light beam, and a tunable wavelength filter upstream or downstream of the spatial filter. The display system further comprises a camera disposed to receive a portion of the patterned light beam reflected from the eye to capture a plurality of eye images, and a controller configured to receive the eye images captured by the camera. The controller is further configured to wavelength-tune the tunable wavelength filter, and to process the eye images for obtaining eye tracking information, different ones of the eye images being captured at different eye illuminating wavelengths.

In some implementations of the display system, the spatial filter may be configured to vary the pattern of bright regions and the controller is configured to receive a set of eye images captured by the camera for different patterns of the bright regions, and to process the set of eye images for obtaining the eye tracking information.

An aspect of the claimed invention provides a method for imaging an object. The method comprises: filtering light spanning a wavelength band with a liquid crystal tunable filter (LCTF), and spatially modulating the light to provide a patterned light beam comprising a pattern of alternating bright and dark regions in a cross-section of the patterned light beam.

The method further comprises illuminating the object with the patterned light beam, receiving a portion of the patterned light beam reflected from the object by an image capturing camera, wavelength-tuning the LCTF to vary a center wavelength of the patterned light beam, capturing, with the camera, images of the object in coordination with the wavelength tuning, the images comprising at least two images captured for two different center wavelengths of the patterned light beam, and processing the images to obtain a 3D information about the object.

The method further comprises varying the pattern of alternating bright and dark regions in coordination with the capturing, so that the images comprise at least two images captured for two different patterns of the patterned light beam.

The method is used in a display system for displaying images to a viewer, the object comprises an eye of the viewer, and the processing includes obtaining eye tracking information. In some implementations of the method, the illuminating may comprise illuminating a scene comprising the object and the processing includes obtaining a 3D image of the scene.

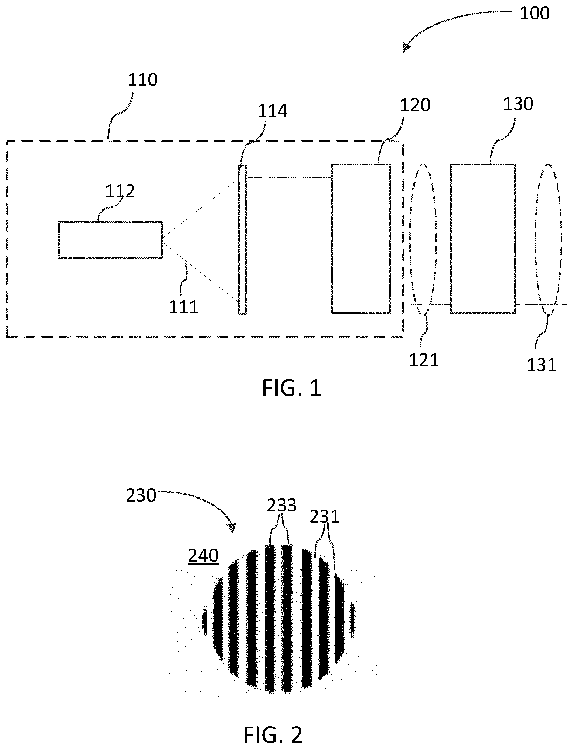

FIG. 1 schematically illustrates, in a side cross-sectional view, an example illuminator 100 configured to project a wavelength-tunable optical pattern, e.g. an optical pattern 230 shown in FIG. 2, comprised of alternating bright (231) and dark (233) regions. In the illustrated embodiment, the illuminator 100, which may also be referred to herein as the wavelength-tunable optical pattern projector, includes a wavelength-tunable light source 110 and a spatial filter 130 downstream of the wavelength-tunable light source 110.

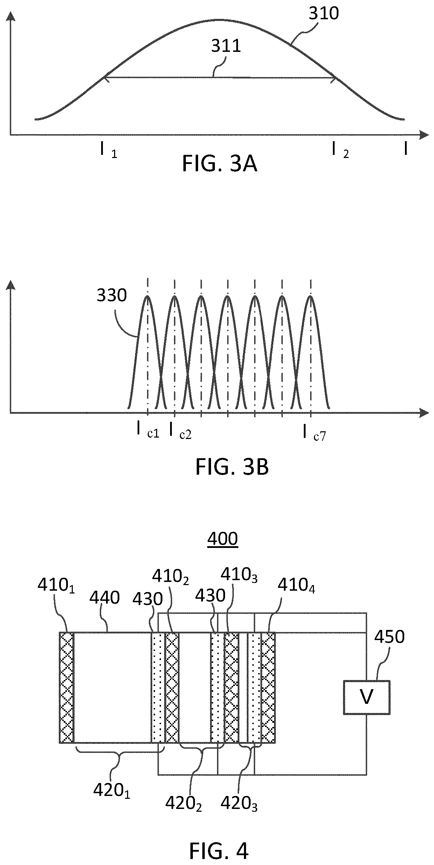

The wavelength-tunable light source 110 may include an optical emitter 112 for emitting light 111 spanning a wavelength band Δ□, (e.g. a wavelength band 311, FIG. 3A), and a liquid crystal tunable filter (LCTF) 120 for tunably band-pass filtering the light 111 to provide a wavelength-tunable light beam 121. In some embodiments, the light beam 121 may be approximately collimated. In some embodiments, a beam shaping and/or collimating optics 114 may be provided, e.g. in an optical path of the light 111 upstream of the LCTF 120, to shape and/or collimate the light 111. In some embodiments, the light beam 121 may be polarized, e.g. linearly polarized. The spatial filter 130 is configured to spatially modulate, or spatially filter, the light beam 121 to provide a patterned light beam 131. The patterned light beam 131 may include the pattern 230 in a cross-section 240 of the light beam, as illustrated in FIG. 2. In some embodiments, the spatial filter 130 may be positioned upstream of the LCTF 120.

Referring to FIG. 3A, the optical emitter 112 may be a low-coherence, broadband light source, with an optical spectrum 310 of the emitting light spanning a wavelength band 311that is at least 50 nm wide at the 3dB level, or at least 100nm wide, or at least 200nm wide. In example embodiments, the optical emitter 112 may be a super-luminescent light-emitting diode (SLED) or a supercontinuum laser source. In some embodiments, the optical emitter 112 may be configured to emit infrared light, e.g. including but not limited to the 800nm - 1600nm wavelength region of a light spectrum. In some embodiments the optical emitter 112 may be configured to emit visible light, e.g. in the 400 nm-700 nm wavelength region. In some embodiments the optical emitter 112 may be configured to emit ultraviolet light.

Turning to FIG. 3B, the LCTF 120 is configured to operate as a tunable pass-band filter to tune a center wavelength λc of a passband thereof 330 across at least a portion of the wavelength band 311 of the emitter 112, thereby also tuning the center wavelength of the light beam 121. FIG. 3B illustrates an example embodiment or scenario where the center wavelength λc of the light beam 121 downstream of the LCTF 120 is tunable, by tuning the LCTF 120, to any one of a seven different center wavelengths λc1, λc2, ..., λc7 within the wavelength band 311 of the optical emitter 112. In various embodiments, the center wavelength λc may be continuously tunable over the emitter wavelength band 311 (FIG. 3A), or switchable between N ≥ 2 fixed center wavelengths λc.

FIG. 4 illustrates an example LCTF 400 that may embody the LCTF 120. The LCTF 400 is configured as an electrically tunable Lyot filter, and includes a sequence of tunable waveplates 4201, 4202, 4203 alternating with optical polarizers 4101, 4102, 4103, and 4104, e.g. suitably oriented linear polarizers. The waveplates 4201, 4202, 4203 may be generally referred to as waveplates 420, while optical polarizers 4101, 4102, 4103, and 4104 may be generally referred to as polarizers 410. Each one of the waveplates 420 is sandwiched between two optical polarizers 410 and has a different thickness and/or optical retardation, with the thickness and/or retardation ratios of the waveplates 420 belonging to a binary set 2, 4, 8, ..., etc. In other words, the LCTF 400 includes a sequence of serially coupled blocks, each block comprising a tunable waveplate (e.g. the tunable waveplate 4201, 4202, 4203) upstream of a polarizer (e.g. the optical polarizer 4101, 4102, 4103).

In an example embodiment shown, each one of the waveplates 420 is half as thick as the preceding waveplate 420. The thickest one of the waveplates 420 defines a free spectral range of the LCTF 400, and the thinnest one defines the wavelength selectivity, e.g. the spectral bandwidth of the filtering function of the LCTF 400. The filter sections do not necessarily have to be disposed in the order of decreasing / increasing thickness or retardance. It is generally enough that the retardance values of different tunable waveplates of the LCTF are in a binary relationship with one another.

Each of the waveplates 420 may include an LC layer 430, which retardance may be tuned by varying a voltage applied thereto, e.g. from a source of a control voltage 450. In some embodiments, one or more of the waveplates 420 may further include a fixed-retardance waveplate, e.g. a quartz waveplate 440. Although the LCTF 400 as shown in FIG. 4 includes three tunable waveplates 420, in various embodiments the number of waveplates 420 in the LCTF 400 may vary from two to ten and more.

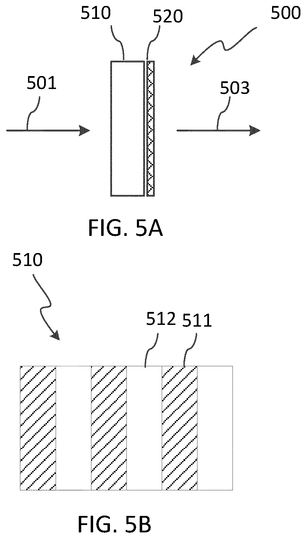

FIG. 5A illustrates, in a cross-sectional side view, a spatial filter 500, which may be used as the spatial filter 130 of the illuminator 100 of FIG. 1. The spatial filter 500 (FIG. 5A) includes a patterned waveplate 510, e.g. a patterned LC waveplate, followed by an optical polarizer 520. FIG. 5B illustrates a plan view of the patterned waveplate 510, e.g. as seen in a cross-section thereof perpendicular to a direction of propagation of an input light beam 501 incident upon the waveplate 510. The input light beam 501 may represent, e.g., the wavelength-tunable light beam 121 as described above with reference to FIG. 1.

The patterned LC waveplate 510 is composed of first waveplate regions 511 alternating with second waveplate regions 512. In the illustrated regions 511 and 512 have the shape of stripes, but they may be shaped differently in other embodiments. The first waveplate regions 511 may have approximately half-wave retardance at the operating wavelengths λ, i.e. generally (2m+1)λ/2 retardance, where m is an integer. In other words, the first waveplate regions 511 may have the retardance of an odd number of half-waves of the input light beam 501. The second waveplate regions 512 may have approximately zero-wave retardance at the operating wavelengths λ, i.e. generally i·λ retardance, where i is an integer. In other words, the first waveplate regions 512 may have the retardance of an integer number of waves of the input light beam 501. Here "approximately" means to within +\-0.1λ.

The input light beam 501 may be polarized, e.g. linearly polarized in a plane defined by the orientation of an output polarizer of the LCTF 120, e.g. the polarizer 4104 of the LCTF 400 of FIG. 4. In an embodiment the patterned waveplate 510 is configured so that the first waveplate regions 511 rotate the polarization of the incident light to an orthogonal polarization state, while the second waveplate regions 512 approximately do not change the polarization of the incident light. The polarizer 520 is configured, e.g. oriented with an optic axis approximately perpendicular or approximately parallel to the polarization direction of the input light beam 501, so as to block light passing through one of the first (511) or the second (512) waveplate regions, while letting the light incident on the other of the regions to pass through. As a result, the spatial filter 500 provides an output light beam 503 that has bright regions alternated with dark regions, e.g. as illustrated in FIG. 2. The output light beam 503 may represent the patterned light beam 131 of FIG. 1.

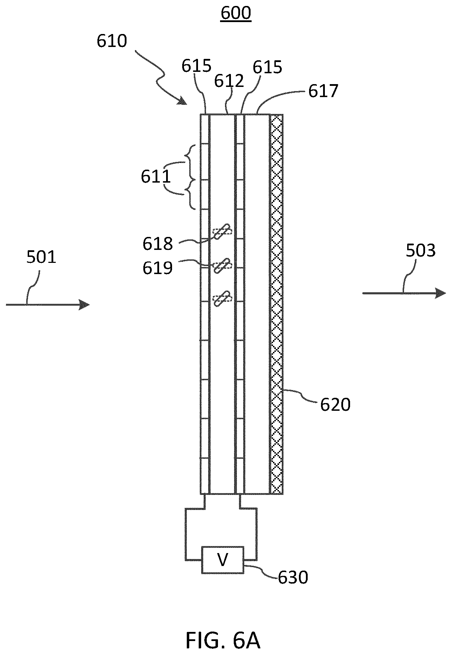

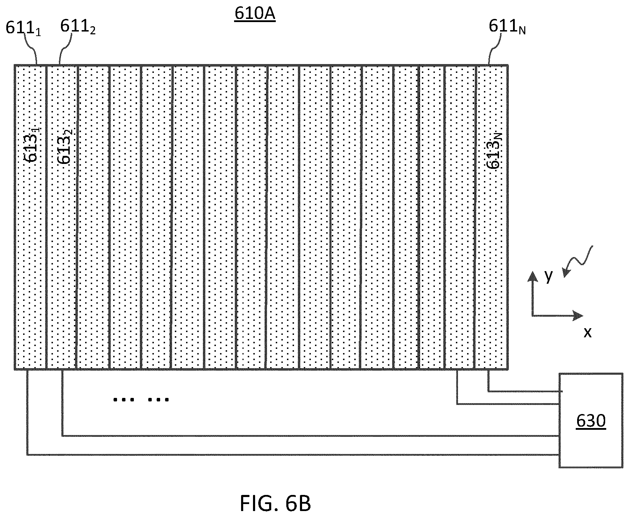

FIGs. 6A and 6B schematically illustrate an example spatial light modulator (SLM) 600 that may be used as the spatial filter 130 in some embodiments of the illuminator 100 of FIG. 1. The SLM 600, which is shown in FIG. 6A in a cross-sectional side view, includes a pixelated LC waveplate 610 followed by a polarizer 620. The pixelated LC waveplate 610 includes an LC layer 612 sandwiched between transparent electrodes 615, at least one of which is segmented to provide an array of individually addressable regions, or pixels, 611. One of the electrodes 615 may be disposed upon an optically transparent substrate 617, physically supporting the LC layer 612. The electrodes 615 may be made of a material that is transparent to incident light of relevant wavelengths, such as e.g. indium tin oxide (ITO). The retardance of the pixels 611 may be individually electrically tunable by a source of control voltage 630, which is operable to vary an electrical field in the LC layer 612 within a selected pixel or pixels to change the orientation of LC molecules 618.

In an example embodiment, the LC molecules 618 may be tilted relative to a normal to the electrodes 615 in the absence of the electric field, at an angle that may be defined by alignment layers (not shown) at one or both sides of the LC layer 612. The tilted orientation of the LC molecules 618 provides the LC layer with non-zero retardance, e.g. approximately a half-wave retardance. By applying a suitable voltage between the electrodes 615, the LC molecules may be forced to approximately aligned along the electric field, as schematically illustrated at 619, which may correspond to an approximately zero retardance.

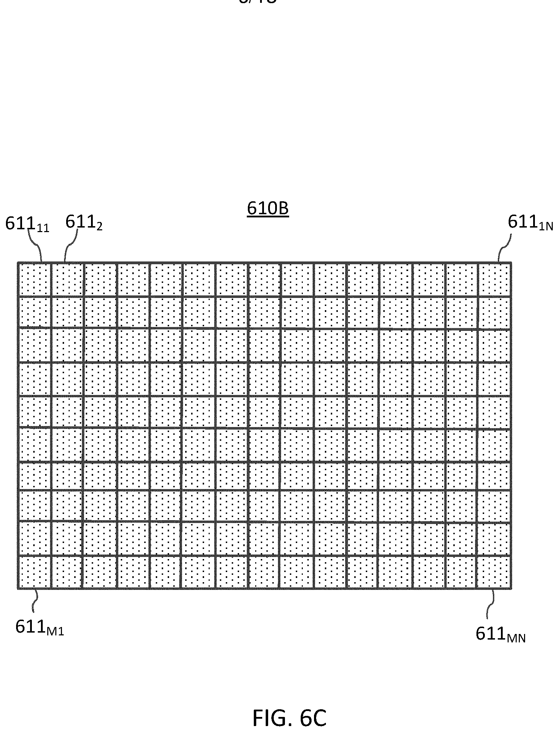

FIG. 6B shows, in a plan view, an example embodiment of the pixelated LC waveplate 610, referred to herein as waveplate 610A. In this embodiment, at least one of the electrodes 615 is segmented along one direction, e.g. horizontal in FIG. 6C, into an array of conducting bars 613n to form a linear array of waveplate pixels 611n, n=1,.., N. By selectively energizing a set of k adjacent pixels 611n, alternating the sets of energized pixels with sets of I adjacent pixels that remain non-energized, wherein k and I are integers that can vary each from 1 to K ≤ N/2, the SLM 600 may be configured to operate as a patterned waveplate 510 described above, with a variable width and number of first waveplate regions 511 and a corresponding number of second waveplate regions 512, also of a variable width.

FIG. 6C shows, in a plan view, another example embodiment of the pixelated LC waveplate 610, referred to herein as waveplate 610B. In this embodiment, at least one of the electrodes 615 is segmented into a two-dimensional (2D) M×N array of conducting elements to form a corresponding M×N array of waveplate pixels 611n,m, n=1,.., N, m=1,..., M. The waveplate 610 may be operated similarly as waveplate 610A, by selectively energizing spaced apart sets of k adjacent pixel columns of the 2D pixel array, alternating the sets of energized pixel columns with sets of I adjacent pixel columns that remain non-energized. In other embodiments, the waveplate 610B may be operated to provide a variable 2D waveplate pattern, in which waveplate regions of variable size having a first retardance alternate, along two orthogonal directions, with variable-size waveplate regions of a second retardance.

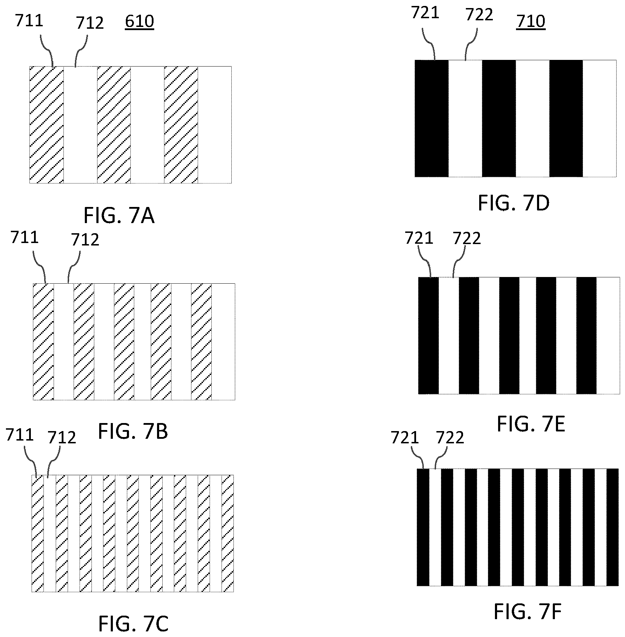

Referring to FIGs. 7A-7C, the waveplate 610A or the waveplate 610B may be operated as a linear array of first waveplate segments 711 alternating with second waveplate segments 712, with different numbers of the segment boundaries per unit area of the array. The first waveplate segments 711 may have an approximately half-wave retardance, while the second waveplate segments 712 may have an approximately zero retardance, e.g. due to being suitably energized by an applied voltage, as described above. For example, FIGs. 7A-7C may correspond to selectively applying a suitable non-zero voltage to spaced-apart sets of three, two, and one consecutive LC pixels 611i, alternating these sets of energized LC pixels 611i with a same or different number of consecutive non-energized LC pixels 611i.

FIGs. 7D-7F illustrate corresponding patterns of alternating bright (722) and dark (721) regions in a cross-sections of the patterned light beam 503 at the output of the polarizer 620. In this embodiment, the light beam 501 may be polarized at 45 degrees to the optic axis of the first waveplate segments 711, and the polarizer 620 may be oriented to transmit the polarization of the light beam 501 and to block the polarization orthogonal thereto. In an embodiment wherein the polarizer 620 is oriented to block the polarization of the light beam 501, regions 721 of the output light beam 503 become bright, and regions 722 become dark.

In embodiments of the SLM 600 including the 2D-patterned waveplate 610B, the SLM 600 may be operated to provide a variable 2D pattern of light and dark regions in a cross-section of the output light beam 503.

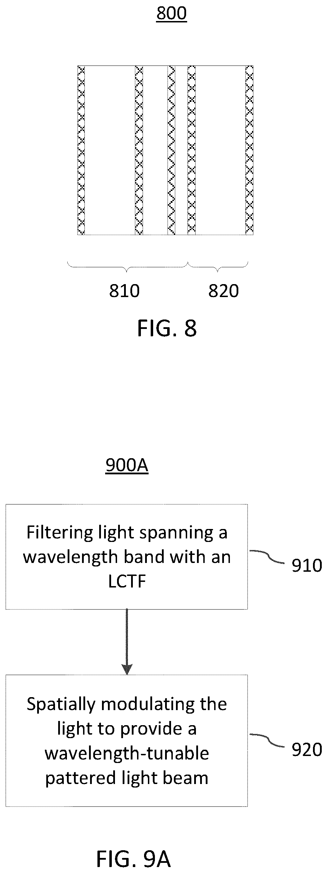

FIG. 8 schematically illustrates an example embodiment in which various layers of an LCTF 810 and of a spatial filter 820 are stacked to form a multi-layer tunable filter block 800. The LCTF 810 may be an embodiment of the LCTF 120 or the LCTF 400 described above. The spatial filter 820 may be an embodiment of the spatial filter 500 or the SLM 600 described above. An embodiment of the illuminator 100 using the tunable filter block 800 in combination with a suitable optical emitter, e.g. the low-coherence, broadband optical emitter 112 may be suitably compact and light-weight for use in a NED or an HMD.

When a non-flat object or a plurality of objects located at different depths is illuminated by an embodiment of the wavelength-tunable optical pattern projector 100 ("illuminator 100") generating the patterned light beam 131 or 503, the bright regions in the reflected light, e.g. regions 231 or 722, become distorted, i.e. change their shape, with the visible distortion being dependent on the 3D shape of the object or the difference in the location depth of the objects. By receiving the reflections of the patterned light beam from the object(s) with a camera comprising an array of photo-sensitive elements, and processing the corresponding images of the object(s) captured by the camera to detect and analyze the reflection-induced distortions of various illumination patterns, a 3D image or model of the object(s), e.g. a 3D point cloud, may be generated using a suitably programmed computer. By processing the images obtained for different center wavelengths λc of the patterned light beam, object(s) or parts thereof having different material composition may be discerned, and in some embodiments identified, e.g. based on known features of reflectance spectra thereof.

Referring now to FIG. 9A, a method 900A for imaging an object using the illuminator 100 of FIG. 1 may include: filtering (FIG. 9A; 910) light spanning a wavelength band (e.g. wavelength band 311, FIG. 3A) with an LCTF (e.g. LCTF 120, 400, 810) to obtain a wavelength-tunable light beam (e.g. the light beam 121 in FIG. 1, the light beam 501 in FIGs. 5, 6A). The wavelength-tunable light beam is spatially modulated (FIG. 9A; 920) to provide a patterned light beam (e.g. the light beam 131 in FIG. 1, 503 in FIGs. 5, 6A) comprising a pattern of alternating bright and dark regions (e.g. regions 233, 231 in FIG. 2, regions 722, 721 in FIGs. 7D-7F) in a cross-section of the light beam.

The patterned light beam obtained in this way may then be used to illuminate the object, to capture one or more sets of images of the object at various illumination wavelengths and/or illumination patterns. The set(s) of these images may then be processed to obtain an enhanced image of the object, i.e. an image of the object that includes more information about the object than any single one of the images. In some embodiments, the set(s) of these two-dimensional (2D) images may be used to obtain a three-dimensional (3D) model or 3D image of the object.

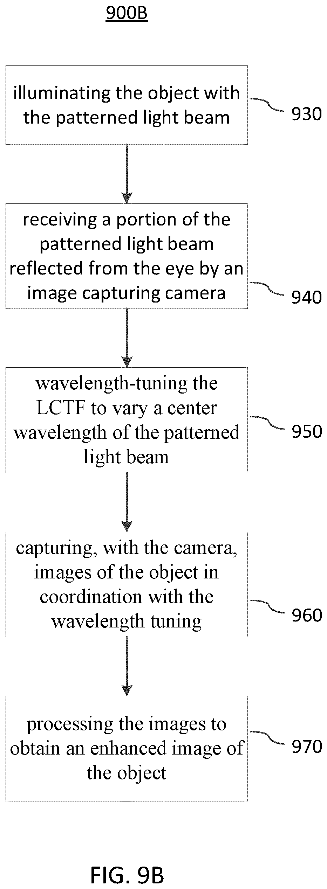

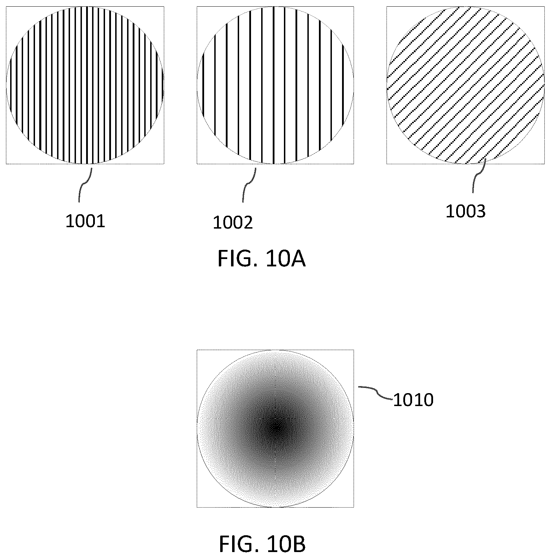

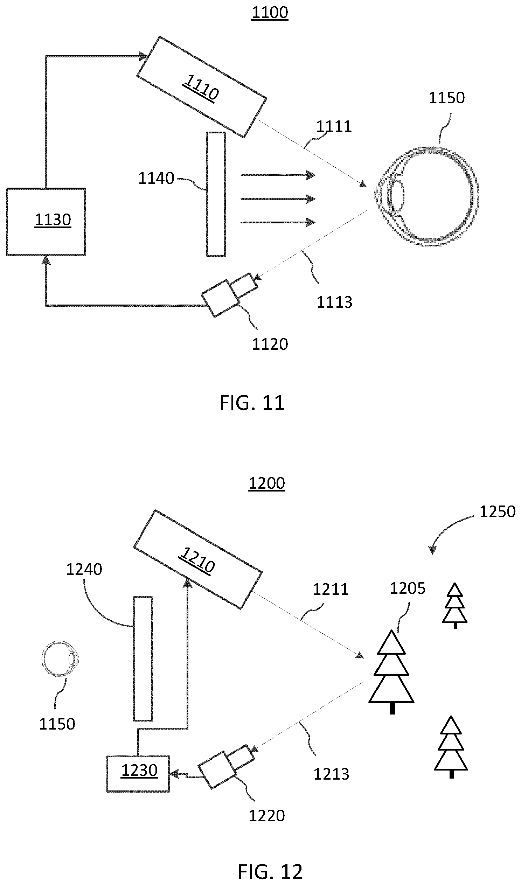

Referring to FIG. 9B with further reference to FIGs. 10A and 10B, an extension 900B of the method 900A (FIG. 9B, "method 900B") may further include illuminating (FIG. 9B, 930) the object with the patterned light beam, and receiving (FIG. 9B, 940) a portion of the patterned light beam reflected from the object by an image capturing camera (e.g. camera 1120 in FIG. 11 or 1220 in FIG. 12). The LCTF is wavelength-tuned (FIG. 9B, 950) to vary a center wavelength λc of the patterned light beam, e.g. as illustrated in FIG. 3B.

Images of the object are captured (FIG. 9B, 960) in coordination with the wavelength tuning. By way of a non-limiting illustrative example, each one of images 1001, 1002, and/or 1003 of FIG. 10A may be captured at each one of two different center wavelengths (e.g. λc1 and one of λc2 or λc7 in FIG. 3B) of the light beam.

In some embodiments, the wavelength tuning 950 and capturing 960 of the method 900B of FIG. 9B may further include varying the pattern of alternating bright and dark regions in coordination with the image capturing, so that the sets of the images comprise at least two images, e.g. 1001 and 1003, captured for two different patterns of the patterned light beam. The method may further include processing (FIG. 9B, 970) the images to obtain an enhanced image of the object (e.g. image 1010 schematically represented in FIG. 10B).

Turning to FIG. 11, a display system 1100 includes an illuminator 1110, which may be an embodiment of the illuminator 100 described above with reference to FIGs. 1-8. The illuminator 1110 is configured to illuminate an eye 1150 of a viewer with a wavelength-tunable patterned light beam 1111. The display system 1100 further includes a camera 1120 for capturing reflections 1113 of the patterned light beam 1111 from the eye 1150, and a controller 1130 configured to tune the illuminator 1110 to vary at least one of the wavelength and a spatial modulation pattern of the patterned light beam 1111, and to process images of the eye captured by the camera 1120 in coordination with the tuning. The display system 1100 may include e.g. an NED or an HMD.

In a typical embodiment, the patterned light beam 1111 is invisible to the eye 1150, i.e. a beam of infrared light. The display system 1100 may further include an image projecting module 1140 for projecting images to the viewer using visible light. The image projecting module 1140 may include, for example, one or more image conveying waveguides for conveying image-carrying light from an image source (not shown), e.g. a display panel or a scanning projector, to the eye 1150.

In an embodiment, the display system may implement an embodiment of the methods 900A and 900B as described above, for illuminating the eye 1150. In such embodiment, the controller 1130 is configured to perform, in cooperation with the camera 1120 and the illuminator 1110, the method 900A, 900B of FIGs. 9A and 9B respectively. The controller 1130 may be configured to obtain eye tracking information from the set(s) of images captured by the camera 1120 for different center wavelengths, and at least in some embodiments, different patterns of alternating bright and dark regions in a cross-section of the beam 1111 illuminating the eye 1150. By processing images of the eye 1150 obtained at different wavelength and different light/dark patterns of the illuminating light, accurate eye tracking information may be obtained.

By way of an illustrative non-limiting example, the images 1001, 1002, 1003 (FIG. 10A) may be images of the eye 1150, or some portion thereof, captured for three different illumination wavelengths, e.g. the center wavelengths λc1, λc4, and λc7 (FIG. 3B) of the patterned light beam 1111. The fill patterns of the images 1001, 1002, and 1003 are not intended to approximate an actual image but are only to distinguish the images. The controller 1130 may be configured, e.g. programmed, to cause the illuminator 1110 to sequentially tune the center wavelength of the patterned light beam 1111 to each of the center wavelengths λc1, λc4, λc7, saving the set of corresponding images 1001, 1002, 1003 in memory. The controller 1130 may be further configured to cause the illuminator 1110 to switch the pattern of dark and bright regions in the cross-section of the beam 1111 between patterns 710 shown in FIGs. 7D, 7E, and 7F, for one or more of the center wavelengths λc1, λc4, λc7.

The controller may then process the sets of images captured for two or more of the patterns to obtain the eye tracking information, such as the gaze direction and the spatial position of the eye 1150, e.g. of the pupil of the eye 1150. It is to be appreciated that the number of center wavelengths λc of the beam 1111, and the number of different spatial illumination patterns 710 in the description above are by way of example only, and the numbers of illumination wavelength and illumination patterns used in various embodiments may be different from the above description, e.g. in a range from 2 to 20 wavelengths λc and/or from 2 to 20 illumination patterns 710.

Referring now to FIG. 12, a display system 1200, e.g. a NED, includes an illuminator 1210, which may be an embodiment of the illuminator 100 described above with reference to FIGs. 1-8. The illuminator 1210 is configured to illuminate outside environment surrounding the viewer and the display system 1200, e.g. an outside scene 1250, with a wavelength-tunable patterned light beam 1211. The outside scene 1250 may include one or more objects, e.g. an object 1205. The display system 1200 further includes a camera 1220 and a controller 1230. The controller 1230 may be configured to control the illuminator 1210 and to receive images captured by the camera 1220. The camera 1220 may be configured to capture reflections 1213 of the patterned light beam 1211 from the object(s) 1205. The controller 1230 may be configured to tune the illuminator 1210 to vary the wavelength and/or a spatial modulation pattern of the light beam 1211, and to process images of the scene 1250 captured by the camera 1120 in coordination with the tuning of the illuminator 1210. The display system 1200 may include e.g. an NED or an HMD.

In some embodiments, the patterned light beam 1211 is invisible to the eye 1150, i.e. a beam of infrared light. In some embodiments, the patterned light beam 1211 is a beam of visible light. The display system 1200 may further include an image projecting module 1240 for projecting images to the eye 1150 of the viewer using visible light. The image projecting module 1240 may include, for example, one or more image conveying waveguides for conveying image-carrying light from an image source (not shown), e.g. a display panel or a scanning projector, to the eye 1150.

In an embodiment, the display system 1200 may be configured to implement an embodiment of the method 900 of FIGs. 9A and 9B. The controller 1230 may be configured to perform, in cooperation with the camera 1220 and the illuminator 1210, the methods 900A and/or 900B of FIGs. 9A and 9B respectively to illuminate the scene 1250, or at least of the object 1205 within the scene, with the light beam 1211 using different patterns of alternating bright and dark regions in a cross-section of the light beam 1211, and optionally at different illumination wavelengths. By processing the set(s) of images captured by the camera 1220 at different light/dark patterns of the illuminating light and/or different illumination wavelengths, a 3D image or model of the scene 1250, or at least of the object 1205, may be obtained.

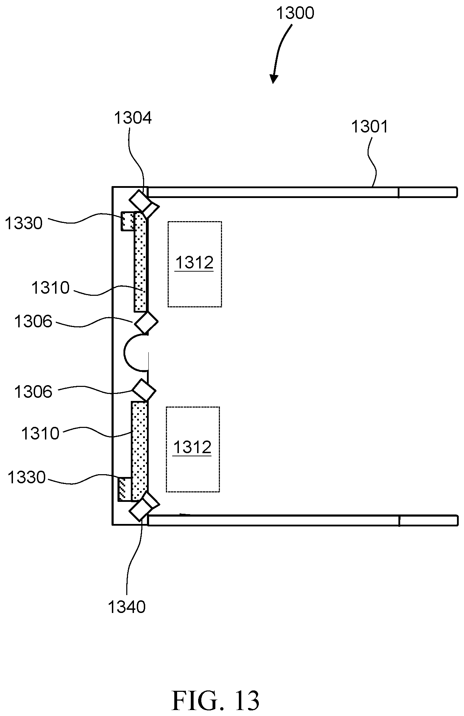

Referring to FIG. 13, a virtual reality (VR) near-eye display (NED) 1300 includes a frame 1301 supporting, for each eye: an image projector 1330, e.g. an LC display panel or a scanning projector; a lightguide 1310 for relaying image light generated by the image projector 1330 to an eyebox 1312 where the eye is detected. One or more eyebox illuminators 1306, such as the illuminators 100, 1110, 1210 described above, may be placed to illuminate each eyebox 1312. A light-tracking camera 1304 may be provided for each eyebox 1312 to receive light of the illuminators 1306 reflected from the eye in the eyebox 1312. The purpose of the cameras 1304 is to determine position and/or orientation of both eyes of the user. The illuminators 1306 illuminate the eyes at the corresponding eyeboxes 1312 with a sequence of illumination patterns and/or a sequence of illumination wavelengths, allowing the eye-tracking cameras 1304 to obtain and process the images of the eyes for different illumination patterns and/or illumination wavelengths.

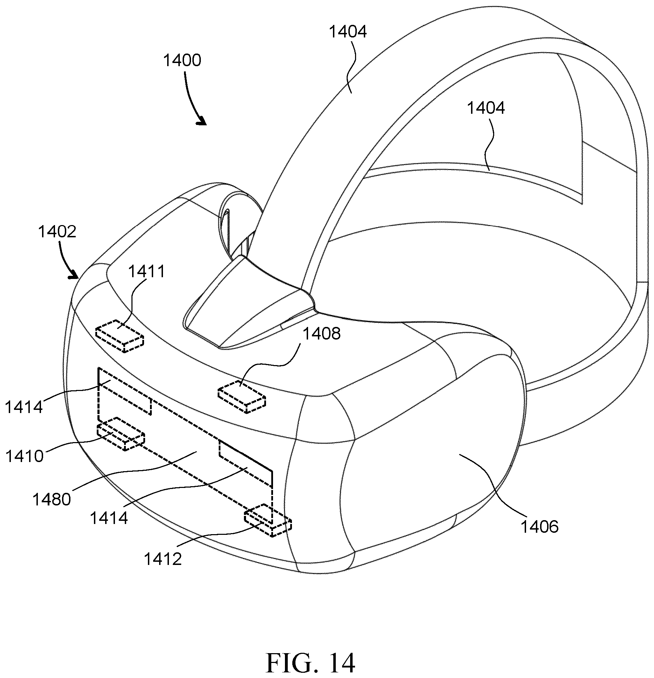

Turning to FIG. 14, an HMD 1400 is an example of an AR/VR wearable display system which encloses the user's face, for a greater degree of immersion into the AR/VR environment. The HMD 1400 may generate the entirely virtual 3D imagery. The HMD 1400 may include a front body 1402 and a band 1404 that can be secured around the user's head. The front body 1402 is configured for placement in front of eyes of a user in a reliable and comfortable manner. A display system 1480 may be disposed in the front body 1402 for presenting AR/VR imagery to the user. The display system 1480 may include various display devices, e.g. such as display panels and scanning image projectors, and lightguides. Sides 1406 of the front body 1402 may be opaque or transparent.

In some embodiments, the front body 1402 includes an inertial measurement unit (IMU) 1410 for tracking acceleration of the HMD 1400, and position sensors 1412 for tracking position of the HMD 1400. The IMU 1410 is an electronic device that generates data indicating a position of the HMD 1400 based on measurement signals received from one or more of position sensors 1412, which generate one or more measurement signals in response to motion of the HMD 1400. Examples of position sensors 1412 include: one or more accelerometers, one or more gyroscopes, one or more magnetometers, one or more other suitable type of sensors that detects motion, a type of sensor used for error correction of the IMU 1410, or some combination thereof. The position sensors 1412 may be located external to the IMU 1410, internal to the IMU 1410, or some combination thereof.

The HMD 1400 may further include an illuminator 1411 and a depth camera assembly (DCA) 1408. The illuminator 1411, which may be an embodiment of the illuminator 100 of FIG. 1 or the illuminator 1210 of FIG. 12, is configured to illuminate the scenery in front of the HMD 1400 at a sequence of wavelengths and/or different illumination patterns, e.g. as described above. The DCA 1408 captures reflections of the illumination light from surrounding objects and processes corresponding images, e.g. to generate a 3D model of the environment in front of the HMD 1400, and/or obtain depth information for the environment surrounding some or all of the HMD 1400. The depth information may be compared with the information from the IMU 1410, for better accuracy of determination of position and orientation of the HMD 1400 in 3D space. In some embodiments, the 3D model of environment may be overlapped with the VR images generated by the display system 1480.

The HMD 1400 may further include an eye tracking system 1414 for determining orientation and position of user's eyes in real time. The eye tracking system 1414 may include a tunable patterned-beam illuminator for illuminating an eye of the user wearing the HMD1400 with a sequence of illumination wavelengths and/or illumination patterns, and a camera for capturing a sequence of corresponding eye images, e,g. as described above with reference to FIG. 11 or FIG. 13. The images are processed to obtain a position and an orientation of the eye, allowing the HMD 1400 to determine the gaze direction of the user and to adjust the image generated by the display system 1480 accordingly. The determined gaze direction and vergence angle may be used to adjust the display system 1480 to reduce the vergence-accommodation conflict. The direction and vergence may also be used for displays' exit pupil steering. Furthermore, the determined vergence and gaze angles may be used for interaction with the user, highlighting objects, bringing objects to the foreground, creating additional objects or pointers, etc. An audio system may also be provided including e.g. a set of small speakers built into the front body 1402.

The functions of the various elements described above as "processors" and/or "controllers," may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Embodiments of the present disclosure may include, or be implemented in conjunction with, an artificial reality system. An artificial reality system adjusts sensory information about outside world obtained through the senses such as visual information, audio, touch (somatosensation) information, acceleration, balance, etc., in some manner before presentation to a user. By way of non-limiting examples, artificial reality may include virtual reality (VR), augmented reality (AR), mixed reality (MR), hybrid reality, or some combination and/or derivatives thereof. Artificial reality content may include entirely generated content or generated content combined with captured (e.g., real-world) content. The artificial reality content may include video, audio, somatic or haptic feedback, or some combination thereof. Any of this content may be presented in a single channel or in multiple channels, such as in a stereo video that produces a three-dimensional effect to the viewer. Furthermore, in some embodiments, artificial reality may also be associated with applications, products, accessories, services, or some combination thereof, that are used to, for example, create content in artificial reality and/or are otherwise used in (e.g., perform activities in) artificial reality. The artificial reality system that provides the artificial reality content may be implemented on various platforms, including a wearable display such as an HMD connected to a host computer system, a standalone HMD, a near-eye display having a form factor of eyeglasses, a mobile device or computing system, or any other hardware platform capable of providing artificial reality content to one or more viewers.

The scope of the claimed invention is defined by the appended claims.

## Claims

1. An illuminator (100, 1110) comprising:
a light source (100) for emitting light (111) spanning a wavelength band;
a liquid crystal tunable filter, LCTF, (120) for spectrally filtering the light (111) and for tuning a center wavelength of the light (111) within the wavelength band;
a spatial filter (130) for spatially modulating the light (111) to provide a patterned light beam (131) comprising a pattern of alternating bright and dark regions in a cross-section of the patterned light beam (131, 1111);
a display system (1140) for projecting images to a viewer, wherein in operation, the patterned light beam (131, 1111) illuminates an eye (1150) of the viewer; and
a camera (1120) configured to receive a portion of the patterned light beam (1113) reflected from the eye (1150).

2. The illuminator (100, 1110) of claim 1, wherein the wavelength band of the light source (100) is in an infrared portion of spectrum.

3. The illuminator (100, 1110) of claim 1 or 2, further comprising a controller (1130) operably coupled to the LCTF (120) and the camera (1120) and configured to:
wavelength-tune the LCTF (120);
obtain eye images captured by the camera (1120) in coordination with the wavelength tuning; and
process the eye images to obtain eye tracking information, wherein different ones of the eye images correspond to different eye illuminating wavelengths;
preferably wherein:
the spatial filter (130) is configured to vary the pattern of alternating bright and dark regions; and
the controller (1130) is configured to obtain the eye images captured by the camera (1120) at different patterns of the alternating bright and dark regions of the patterned light beam (131, 1111) illuminating the eye (1150), and to process the images to obtain eye tracking information.

4. The illuminator (100, 1110) of any preceding claim, wherein the light (111) is incident on the spatial filter (130) as a polarized light beam, and wherein the spatial filter (130) comprises a patterned waveplate configured to spatially modulate a polarization state of the polarized light beam, such that the polarization state at an output of the patterned waveplate alternates between first and second orthogonal polarization states in a cross-section of the polarized light beam; and
the illuminator comprises a polarizer downstream of the patterned waveplate for blocking light in the first polarization state while propagating light in the second polarization state to provide the patterned light beam;
preferably wherein the patterned waveplate comprises an array of alternating first and second waveplate segments having differing retardance;
further preferably wherein the first waveplate segments have an approximately half-wave retardance, and the second waveplate segments have an approximately zero retardance or an approximately full-wave retardance.

5. The illuminator (100, 1110) of any preceding claim, wherein the spatial filter (130) comprises a spatial light modulator, SLM;
preferably wherein the SLM comprises an array of liquid crystal pixels having individually tunable retardance, and a polarizer downstream of the array of liquid crystal pixels.

6. The illuminator (100, 1110) of any preceding claim, wherein the **LCTF** (120) comprises a sequence of serially coupled blocks, each block comprising a tunable waveplate upstream of a polarizer;
preferably wherein each tunable waveplate comprises an LC layer having a tunable retardance, wherein retardance values of different tunable waveplates of the LCTF (120) are in a binary relationship with one another.

7. A display system (1100) for projecting images to a viewer, the display system (1100) comprising:
an illuminator (1110) for illuminating an eye (1150) of the viewer with a patterned light beam (1111) comprising a pattern of alternating bright and dark regions in a cross-section of the patterned light beam (1111), the illuminator (1110) comprising a spatial filter (130) operable to spatially filter light incident thereon to output the patterned light beam (1111), and a tunable wavelength filter upstream or downstream of the spatial filter (130);
a camera (1120) disposed to receive a portion of the patterned light beam (1113) reflected from the eye (1115) to capture a plurality of eye images; and
a controller (1130) configured to receive the eye images captured by the camera (1120);
wherein the controller (1130) is further configured to wavelength-tune the tunable wavelength filter, and to process the eye images for obtaining eye tracking information, different ones of the eye images being captured at different eye illuminating wavelengths.

8. The display system (1100) of claim 7, wherein the spatial filter (130) is configured to vary the pattern of bright regions and the controller (1130) is configured to receive a set of eye images captured by the camera (1120) for different patterns of the bright regions, and to process the set of eye images for obtaining the eye tracking information.

9. A method (900A, 900B) for imaging an object, the method (900A) comprising:
filtering (910) light spanning a wavelength band with a liquid crystal tunable filter, LCTF; and
spatially (920) modulating the light to provide a patterned light beam comprising a pattern of alternating bright and dark regions in a cross-section of the patterned light beam;
the method (900A, 900B) further comprising:
Illuminating (930) the object with the patterned light beam;
receiving (940) a portion of the patterned light beam reflected from the object by an image capturing camera;
wavelength-tuning (950) the LCTF to vary a center wavelength of the patterned light beam;
capturing (960), with the camera, images of the object in coordination with the wavelength tuning, the images comprising at least two images captured for two different center wavelengths of the patterned light beam; and
processing (970) the images to obtain a 3D information about the object;
the method (900A, 900B) further comprising varying the pattern of alternating bright and dark regions in coordination with the capturing, so that the images comprise at least two images captured for two different patterns of the patterned light beam;
the method (900A, 900B) for use in a display system for displaying images to a viewer, wherein the object comprises an eye of the viewer, and wherein the processing includes obtaining eye tracking information.

## Patentansprüche

1. Einen Beleuchter (100, 1110), der Folgendes beinhaltet:
eine Lichtquelle (100) zum Emittieren von Licht (111), das ein Wellenlängenband überspannt;
ein abstimmbares Flüssigkristallfilter, LCTF, (120) zum spektralen Filtern des Lichts (111) und zum Abstimmen einer mittleren Wellenlänge des Lichts (111) innerhalb des Wellenlängenbands;
ein räumliches Filter (130) zum räumlichen Modulieren des Lichts (111), um einen gemusterten Lichtstrahl (131) bereitzustellen, der ein Muster aus abwechselnd hellen und dunklen Bereichen in einem Querschnitt des gemusterten Lichtstrahls (131, 1111) beinhaltet;
ein Anzeigesystem (1140) zum Projizieren von Bildern zu einem Betrachter, wobei im Betrieb der gemusterte Lichtstrahl (131, 1111) ein Auge (1150) des Betrachters beleuchtet; und
eine Kamera (1120), die dazu konfiguriert ist, einen Teil des gemusterten Lichtstrahls (1113) zu empfangen, der von dem Auge (1150) reflektiert wird.

2. Beleuchter (100, 1110) gemäß Anspruch 1, wobei das Wellenlängenband der Lichtquelle (100) in einem Infrarotteil des Spektrums liegt.

3. Beleuchter (100, 1110) gemäß Anspruch 1 oder 2, der ferner eine Steuervorrichtung (1130) beinhaltet, die betriebsmäßig mit dem LCTF (120) und der Kamera (1120) gekoppelt und für Folgendes konfiguriert ist:
Wellenlängenabstimmen des LCTF (120);
Erhalten von Augenbildern, die von der Kamera (1120) in Koordination mit der Wellenlängenabstimmung aufgenommen wurden; und
Verarbeiten der Augenbilder, um Augenverfolgungsinformationen zu erhalten, wobei verschiedene der Augenbilder verschiedenen augenbeleuchtenden Wellenlängen entsprechen;
vorzugsweise wobei:
das räumliche Filter (130) dazu konfiguriert ist, das Muster aus abwechselnd hellen und dunklen Bereichen zu variieren; und
die Steuervorrichtung (1130) dazu konfiguriert ist, die von der Kamera (1120) bei verschiedenen Mustern der abwechselnd hellen und dunklen Bereiche des gemusterten Lichtstrahls (131, 1111), der das Auge (1150) beleuchtet, aufgenommenen Augenbilder zu erhalten und die Bilder zu verarbeiten, um Augenverfolgungsinformationen zu erhalten.

4. Beleuchter (100, 1110) gemäß einem der vorhergehenden Ansprüche, wobei das Licht (111) auf das Raumfilter (130) als ein polarisierter Lichtstrahl auftrifft und wobei das Raumfilter (130) eine gemusterte Wellenplatte beinhaltet, die dazu konfiguriert ist, einen Polarisationszustand des polarisierten Lichtstrahls räumlich zu modulieren, sodass der Polarisationszustand an einem Ausgang der gemusterten Wellenplatte zwischen einem ersten und einem zweiten orthogonalen Polarisationszustand in einem Querschnitt des polarisierten Lichtstrahls wechselt; und
der Beleuchter einen Polarisator stromabwärts der gemusterten Wellenplatte beinhaltet, um Licht in dem ersten Polarisationszustand zu blockieren, während Licht in dem zweiten Polarisationszustand weitergeleitet wird, um den gemusterten Lichtstrahl bereitzustellen;
vorzugsweise wobei die gemusterte Wellenplatte eine Anordnung von abwechselnd ersten und zweiten Wellenplattensegmenten mit unterschiedlichen Verzögerungen beinhaltet;
ferner vorzugsweise wobei die ersten Wellenplattensegmente eine annähernde Halbwellenverzögerung aufweisen und die zweiten Wellenplattensegmente eine annähernde Nullverzögerung oder eine annähernde Vollwellenverzögerung aufweisen.

5. Beleuchter (100, 1110) gemäß einem der vorhergehenden Ansprüche, wobei das räumliche Filter (130) einen räumlichen Lichtmodulator, SLM, beinhaltet; vorzugsweise wobei der SLM eine Anordnung von Flüssigkristallpixeln mit individuell abstimmbarer Verzögerung und einen Polarisator stromabwärts der Anordnung von Flüssigkristallpixeln beinhaltet.

6. Beleuchter (100, 1110) gemäß einem der vorhergehenden Ansprüche, wobei das LCTF (120) eine Folge von seriell gekoppelten Blöcken beinhaltet, wobei jeder Block eine abstimmbare Wellenplatte stromaufwärts von einem Polarisator beinhaltet; vorzugsweise wobei jede abstimmbare Wellenplatte eine LC-Schicht mit einer abstimmbaren Verzögerung beinhaltet, wobei die Verzögerungswerte verschiedener abstimmbarer Wellenplatten des LCTF (120) in einer binären Beziehung zueinander stehen.

7. Ein Anzeigesystem (1100) zum Projizieren von Bildern zu einem Betrachter, wobei das Anzeigesystem (1100) Folgendes beinhaltet:
einen Beleuchter (1110) zum Beleuchten eines Auges (1150) des Betrachters mit einem gemusterten Lichtstrahl (1111), der ein Muster aus abwechselnd hellen und dunklen Bereichen in einem Querschnitt des gemusterten Lichtstrahls (1111) beinhaltet, wobei der Beleuchter (1110) ein räumliches Filter (130), der betriebsfähig ist, um darauf einfallendes Licht räumlich zu filtern, um den gemusterten Lichtstrahl (1111) auszugeben, und ein abstimmbares Wellenlängenfilter stromaufwärts oder stromabwärts des räumlichen Filters (130) beinhaltet;
eine Kamera (1120), die angeordnet ist, um einen Teil des gemusterten Lichtstrahls (1113) zu empfangen, der von dem Auge (1115) reflektiert wird, um eine Vielzahl von Augenbildern aufzunehmen; und
eine Steuervorrichtung (1130), die dazu konfiguriert ist, die von der Kamera (1120) aufgenommenen Augenbilder zu empfangen; wobei die Steuervorrichtung (1130) ferner dazu konfiguriert ist, das abstimmbare Wellenlängenfilter auf die Wellenlänge abzustimmen und die Augenbilder zu verarbeiten, um Augenverfolgungsinformationen zu erhalten, wobei verschiedene der Augenbilder bei verschiedenen Augenbeleuchtungswellenlängen aufgenommen werden.

8. Anzeigesystem (1100) gemäß Anspruch 7, wobei das räumliche Filter (130) dazu konfiguriert ist, das Muster der hellen Bereiche zu variieren, und die Steuervorrichtung (1130) dazu konfiguriert ist, einen Satz von Augenbildern zu empfangen, die von der Kamera (1120) für verschiedene Muster der hellen Bereiche aufgenommen wurden, und den Satz von Augenbildern zu verarbeiten, um die Augenverfolgungsinformationen zu erhalten.

9. Ein Verfahren (900A, 900B) zum Abbilden eines Objekts, wobei das Verfahren (900A) Folgendes beinhaltet:
Filtern (910) von Licht, das ein Wellenlängenband überspannt, mit einem abstimmbaren Flüssigkristallfilter, LCTF; und
räumliches Modulieren (920) des Lichts, um einen gemusterten Lichtstrahl bereitzustellen, der ein Muster aus abwechselnd hellen und dunklen Bereichen in einem Querschnitt des gemusterten Lichtstrahls beinhaltet;
wobei das Verfahren (900A, 900B) ferner Folgendes beinhaltet:
Beleuchten (930) des Objekts mit dem gemusterten Lichtstrahl;
Empfangen (940) eines Teils des gemusterten Lichtstrahls, der von dem Objekt reflektiert wird, durch eine bildaufnehmende Kamera;
Wellenlängenabstimmen (950) des LCTF, um eine mittlere Wellenlänge des gemusterten Lichtstrahls zu variieren;
Aufnehmen (960) von Bildern des Objekts mit der Kamera in Koordination mit der Wellenlängenabstimmung, wobei die Bilder wenigstens zwei Bilder beinhalten, die für zwei verschiedene mittlere Wellenlängen des gemusterten Lichtstrahls aufgenommen wurden; und
Verarbeiten (970) der Bilder, um eine 3D-Information über das Objekt zu erhalten;
wobei das Verfahren (900A, 900B) ferner das Variieren des Musters von abwechselnd hellen und dunklen Bereichen in Koordination mit dem Aufnehmen beinhaltet, sodass die Bilder wenigstens zwei Bilder beinhalten, die für zwei verschiedene Muster des gemusterten Lichtstrahls aufgenommen wurden;
wobei das Verfahren (900A, 900B) für die Verwendung in einem Anzeigesystem zum Anzeigen von Bildern für einen Betrachter dient, wobei das Objekt ein Auge des Betrachters beinhaltet und wobei die Verarbeitung das Erhalten von Augenverfolgungsinformationen umfasst.

## Revendications

1. Un illuminateur (100, 1110) comprenant :
une source de lumière (100) destinée à émettre de la lumière (111) couvrant une gamme de longueurs d'ondes ;
un filtre accordable à cristaux liquides, LCTF (*Liquid Crystal Tunable Filter*), *(120)* destiné à filtrer spectralement la lumière (111) et à accorder une longueur d'onde centrale de la lumière (111) dans la gamme de longueurs d'ondes ;
un filtre spatial (130) destiné à moduler spatialement la lumière (111) pour fournir un faisceau de lumière à motif (131) comprenant un motif de régions claires et sombres alternées dans une section transversale du faisceau de lumière à motif (131, 1111) ;
un système d'affichage (1140) destiné à projeter des images à l'intention d'un spectateur, où, en fonctionnement, le faisceau de lumière à motif (131, 1111) illumine un œil (1150) du spectateur ; et
une caméra (1120) configurée pour recevoir une portion du faisceau de lumière à motif (1113) réfléchie par l'œil (1150).

2. L'illuminateur (100, 1110) de la revendication 1, où la gamme de longueurs d'ondes de la source de lumière (100) se trouve dans une portion infrarouge du spectre.

3. L'illuminateur (100, 1110) de la revendication 1 ou de la revendication 2, comprenant en outre un contrôleur (1130) fonctionnellement couplé au LCTF (120) et à la caméra (1120) et configuré pour :
accorder en longueur d'onde le LCTF (120) ;
obtenir des images oculaires capturées par la caméra (1120) en coordination avec l'accord en longueur d'onde ; et
traiter les images oculaires afin d'obtenir des informations de suivi oculaire, différentes images oculaires correspondant à différentes longueurs d'ondes d'illumination de l'œil ;
de préférence où :
le filtre spatial (130) est configuré pour faire varier le motif de régions claires et sombres alternées ; et
le contrôleur (1130) est configuré pour obtenir les images oculaires capturées par la caméra (1120) au niveau de différents motifs des régions claires et sombres alternées du faisceau de lumière à motif (131, 1111) illuminant l'œil (1150), et pour traiter les images afin d'obtenir des informations de suivi oculaire.

4. L'illuminateur (100, 1110) de n'importe quelle revendication précédente, où la lumière (111) est incidente sur le filtre spatial (130) sous la forme d'un faisceau de lumière polarisée, et où le filtre spatial (130) comprend une lame d'onde à motif configurée pour moduler spatialement un état de polarisation du faisceau de lumière polarisée, de telle sorte que l'état de polarisation au niveau d'une sortie de la lame d'onde à motif alterne entre des premier et deuxième états de polarisation orthogonaux dans une section transversale du faisceau de lumière polarisée ; et
l'illuminateur comprend un polariseur en aval de la lame d'onde à motif destiné à bloquer de la lumière dans le premier état de polarisation tout en propageant de la lumière dans le deuxième état de polarisation pour fournir le faisceau de lumière à motif ;
de préférence où la lame d'onde à motif comprend un groupement de premiers et deuxièmes segments de lame d'onde alternés ayant un retard différent ;
de préférence encore où les premiers segments de lame d'onde ont un retard d'approximativement une demi-onde, et les deuxièmes segments de lame d'onde ont un retard approximativement nul ou un retard d'approximativement une onde entière.

5. L'illuminateur (100, 1110) de n'importe quelle revendication précédente, où le filtre spatial (130) comprend un modulateur spatial de lumière, SLM (*Spatial Light Modulator*) *;*
de préférence où le SLM comprend un groupement de pixels à cristaux liquides ayant un retard individuellement accordable, et un polariseur en aval du groupement de pixels à cristaux liquides.

6. L'illuminateur (100, 1110) de n'importe quelle revendication précédente, où le LCTF (120) comprend une séquence de blocs couplés en série, chaque bloc comprenant une lame d'onde accordable en amont d'un polariseur ;
de préférence où chaque lame d'onde accordable comprend une couche LC ayant un retard accordable, des valeurs de retard de différentes lames d'ondes accordables du LCTF (120) étant en relation binaire les unes avec les autres.

7. Un système d'affichage (1100) destiné à projeter des images à l'intention d'un spectateur, le système d'affichage (1100) comprenant :
un illuminateur (1110) destiné à illuminer un œil (1150) du spectateur avec un faisceau de lumière à motif (1111) comprenant un motif de régions claires et sombres alternées dans une section transversale du faisceau de lumière à motif (1111), l'illuminateur (1110) comprenant un filtre spatial (130) exploitable pour filtrer spatialement de la lumière incidente dessus afin de délivrer en sortie le faisceau de lumière à motif (1111), et un filtre de longueur d'onde accordable en amont ou en aval du filtre spatial (130) ;
une caméra (1120) disposée pour recevoir une portion du faisceau de lumière à motif (1113) réfléchie par l'œil (1115) afin de capturer une pluralité d'images oculaires ; et un contrôleur (1130) configuré pour recevoir les images oculaires capturées par la caméra (1120) ;
où le contrôleur (1130) est en outre configuré pour accorder en longueur d'onde le filtre de longueur d'onde accordable, et pour traiter les images oculaires afin d'obtenir des informations de suivi oculaire, différentes images oculaires étant capturées à différentes longueurs d'ondes d'illumination de l'œil.

8. Le système d'affichage (1100) de la revendication 7, où le filtre spatial (130) est configuré pour faire varier le motif de régions claires et le contrôleur (1130) est configuré pour recevoir un ensemble d'images oculaires capturées par la caméra (1120) pour différents motifs des régions claires, et pour traiter l'ensemble d'images oculaires afin d'obtenir les informations de suivi oculaire.

9. Un procédé (900A, 900B) pour l'imagerie d'un objet, le procédé (900A) comprenant le fait :
de filtrer (910) de la lumière couvrant une gamme de longueurs d'ondes avec un filtre accordable à cristaux liquides, LCTF ; et
de moduler spatialement (920) la lumière pour fournir un faisceau de lumière à motif comprenant un motif de régions claires et sombres alternées dans une section transversale du faisceau de lumière à motif ;
le procédé (900A, 900B) comprenant en outre le fait :
d'illuminer (930) l'objet avec le faisceau de lumière à motif ;
de recevoir (940) une portion du faisceau de lumière à motif réfléchie par l'objet par une caméra de capture d'images ;
d'accorder en longueur d'onde (950) le LCTF pour faire varier une longueur d'onde centrale du faisceau de lumière à motif ;
de capturer (960), avec la caméra, des images de l'objet en coordination avec l'accord en longueur d'onde, les images comprenant au moins deux images capturées pour deux longueurs d'ondes centrales différentes du faisceau de lumière à motif ; et
de traiter (970) les images pour obtenir des informations 3D concernant l'objet ;
le procédé (900A, 900B) comprenant en outre le fait de faire varier le motif de régions claires et sombres alternées en coordination avec la capture, de sorte que les images comprennent au moins deux images capturées pour deux motifs différents du faisceau de lumière à motif ;
le procédé (900A, 900B) étant destiné à une utilisation dans un système d'affichage pour afficher des images à l'intention d'un spectateur, où l'objet comprend un œil du spectateur, et où le traitement inclut le fait d'obtenir des informations de suivi oculaire.
